# EUROPÄISCHE PATENTSCHRIFT

(11) **EP 2 584 240 B1**
(45) Veröffentlichungstag und Bekanntmachung des Hinweises auf die Patenterteilung: **14.12.2016**
(21) Anmeldenummer: 12006114.8
(22) Anmeldetag: 29.08.2012
(51) Int. Cl.: F16L 23/08, F16L 23/20, F01N 13/18

(54) **PROFILSCHELLE MIT DICHTELEMENT**
PROFILE CLAMP WITH SEAL ELEMENT
BRIDE DE FIXATION AVEC ÉLÉMENT D'ÉTANCHÉITÉ

(30) Priorität: 22.10.2011 DE 102011116768
(43) Veröffentlichungstag der Anmeldung: 24.04.2013
(73) Patentinhaber: NORMA Germany GmbH, 63477 Maintal (DE)
(72) Erfinder: Henrich, Detlef, 63694 Limeshain (DE); Krauss, Mathias, 61130 Nidderau (DE); Krüger, Manfred, 63654 Büdingen (DE)
(74) Vertreter: Patentanwälte Olbricht Buchhold Keulertz

(56) Entgegenhaltungen:
- EP-A1- 2 284 423
- WO-A1-2005/001323
- DE-T2- 60 210 142
- FR-A1- 2 906 864

## Beschreibung

Die Erfindung betrifft eine Profilschelle mit einem Spannelement und einem Profilband, an dem ein Dichtelement verliersicher gehalten ist.

Derartige Profilschellen dienen beispielsweise zum fluiddichten Verbinden von zwei Rohrenden, die radial nach außen gerichtete Verbindungsflansche haben. Die Profilschelle wird dann auf diese Flansche aufgesetzt, wobei durch Spannen der Profilschelle axiale und radiale Haltekräfte eingebracht werden können. Ein Querschnitt des Profilbands ist dafür in der Regel V-förmig oder U-förmig ausgebildet.

Um eine fluiddichte Verbindung zu erreichen, wird häufig ein Dichtelement eingesetzt, das axial zwischen den Verbindungsflanschen der Rohrenden positioniert werden muss. Wenn das Dichtelement nicht an der Profilschelle befestigt ist, müssen mindestens zwei unabhängige Bauteile, nämlich die Profilschelle und das Dichtelement, gehandhabt werden mit der Folge, dass der Einbau der Profilschelle relativ kompliziert ist. Der Monteur muss dann sowohl das Dichtelement als auch die Profilschelle bezüglich der Rohre korrekt positionieren.

Es ist daher beispielsweise aus FR 2 906 864 A1 ein System zum Verbinden zweier Rohre bekannt. Das System weist eine Schelle mit einem Band und einer Spannvorrichtung aus einer Schraube und einer Mutter auf. Weiterhin ist ein Dichtelement mit Klammern vorgesehen. Die Klammern dienen der Halterung des Dichtelements am Band der Schelle.

DE 602 10 142 T2 betrifft eine Spannvorrichtung zur dichten Kupplung von zwei Rohren mit Spannauflagen. Die Spannvorrichtung weist eine Schelle mit einem Band und einer Spannvorrichtung aus einer Schraube und einer Mutter auf. Weiterhin ist eine Scheibe formschlüssig über Klammern mit der Schelle verbunden. Die Scheibe dient als Dichtelement.

EP 2 284 423 A1 betrifft ein Dichtelement für ein Verbindungselement zum Verbinden von Rohren. Das Verbindungselement weist zwei Segmente auf, die durch zwei Spannelemente miteinander verbunden werden können, und die ein Dichtelement aufweisen. Das Dichtelement besteht aus einem ersten Ring, der aus einem elastischen Material gebildet ist, und einem zweiten Ring, der aus einem starren Material gebildet ist. Es ist im geschlossenen Zustand des Verbindungselements formschlüssig in den beiden Segmenten gehalten.

WO 2005/001323 A1 betrifft ein System zum Verbinden zweier Rohre. Dabei werden die beiden Rohre über ein Verbindungselement derartig miteinander verbunden, dass ein Klemmelement über das Verbindungselement geführt und ein Kraftschluss durch Spannen eines Verschlussmechanismus hergestellt werden kann. Dabei können am Verbindungselement Dichtelemente vorgesehen sein.

Derartige Haltekonstruktionen sind relativ aufwändig. In der Regel ist dafür Spezialwerkzeug erforderlich.

Der Erfindung liegt nun die Aufgabe zugrunde, eine verliersichere Befestigung des Dichtelements am Profilband anzugeben, die einfach gestaltet ist.

Erfindungsgemäß wird diese Aufgabe durch eine Profilschelle mit den im Anspruch 1 definierten Merkmalen gelöst. Das Dichtelement weist über einen Umfang verteilte elastisch verformbare Abstandshalter auf, die an einer radialen Innenseite des Profilbandes kraftschlüssig anliegen, und die das Dichtelement dadurch auch im ungespannten Zustand der Schelle verliersicher halten.

Das kraftschlüssige Anliegen wird beispielsweise dadurch erreicht, dass die Abstandshalter mit einer Vorspannung an der Innenseite anliegen. Dabei sind zwei Abstandshalter vorgesehen , die am Umfang des Dichtelements angeordnet sind, also an einer radialen Außenseite des Dichtelements sind. Bei einer kraftschlüssigen Halterung kann die Haltekraft relativ genau eingestellt werden. Es ist dadurch möglich, die Haltekraft derart zu wählen, dass das Dichtelement werkzeuglos in die Profilschelle eingebracht werden kann, dass also per Hand eine ausreichende Verformung der Abstandshalter erzielbar ist. Gleichzeitig ist die durch die elastische Verformung der Abstandshalter bzw. deren Vorspannung eingebrachte Kraft dann ausreichend groß, um das Dichtelement sicher in der Profilschelle zu halten. Das Dichtelement wird somit auch im ungespannten Zustand der Schelle verliersicher gehalten. Da auf eine formschlüssige Verbindung verzichtet werden kann, ergibt sich damit eine sichere, einfach gestaltete Verbindung zwischen dem Dichtelement und dem Profilband.

Erfindungsgemäß weisen die Abstandshalter ein festgelegtes Ende, mit dem sie mit dem Dichtelement verbunden sind, einen Kontaktbereich, mit dem sie an der Innenseite des Profilbands anliegen, und ein freies Ende auf. Das freie Ende ist dann also durch eine elastische Verformung des Abstandshalters gegenüber dem Dichtelement radial bewegbar. Dies stellt eine relativ einfache Ausgestaltung dar, um die erforderliche Elastizität der Abstandshalter zu erreichen, die der beim Spannen der Profilschelle erfolgenden Durchmesserverringerung folgen müssen.

Bevorzugterweise ist das Dichtelement als Metalldichtung ausgebildet. Eine derartige Dichtung ist gegenüber vielen Chemikalien widerstandsfähig. Gleichzeitig ist sie relativ elastisch, so dass eine ausreichende Dichtwirkung erzielt werden kann.

Vorzugsweise sind die Abstandshalter einstückig mit dem Dichtelement ausgebildet. Die Gefahr, dass sich die Abstandshalter vom Dichtelement unbeabsichtigt lösen, wird damit sehr gering gehalten. Gleichzeitig wird der Herstellungsaufwand klein gehalten, da die Abstandshalter einfach gleichzeitig mit dem Dichtelement hergestellt werden können. Ein zusätzlicher Verbindungsschritt kann dann entfallen.

In einer bevorzugten Ausführungsform erstrecken sich die Abstandshalter parallel zur Umfangsrichtung. Die Abstandshalter sind also in Umfangsrichtung orientiert, was bedeutet, dass eine Längserstreckung der Abstandshalter parallel zur Umfangsrichtung verläuft. Die Enden der Abstandshalter sind dann auf gleicher axialer Position, aber in Umfangsrichtung und in radialer Richtung beabstandet. Der Kontaktbereich ist dabei am weitesten radial außen angeordnet, was bedeutet, dass das freie Ende nach innen umgebogen ist. Die Abstandshalter können beispielsweise aus einem Metall gebogen sein. Durch das Umbiegen entstehen dabei relativ runde Kanten, die ein Gleiten der Abstandshalter in Umfangsrichtung auf der Innenseite des Profilbandes ermöglichen, so dass die zusätzliche Reibung, die beim Spannen der Profilschelle überwunden werden muss, klein gehalten werden kann.

Vorzugsweise ist das freie Ende eingerollt, wobei eine Biegeachse parallel zur Umfangsrichtung ist. Die Biegeachse muss natürlich nicht streng parallel sein, sondern wird in der Regel geradlinig verlaufen. Durch das Einrollen des freien Endes wird eine relativ gute Elastizität der Abstandshalter erhalten. Gleichzeitig ergibt sich ein abgerundeter Kontaktbereich und damit eine relativ glatte und flächige Anlage an der Innenseite des Profilbandes. Die Belastung des Innenbandes wird damit klein gehalten.

Vorzugsweise sind an der Innenseite des Profilbandes radiale Vorsprünge ausgebildet. Die Vorsprünge ragen dabei radial nach innen und sind beispielsweise durch Sicken gebildet, die in das Profilband eingedrückt sind. Durch diese Vorsprünge wird eine lose radiale Vorpositionierung des Dichtelements innerhalb der Profilschelle erreicht. Ein Verdrehen des Dichtelements innerhalb der Profilschelle wird damit unterbunden.

Vorzugsweise weist das Profilband zwei Spannköpfe auf, mit denen das Spannelement zusammenwirkt. Das Spannelement ist beispielsweise als Spannschraube ausgebildet, die durch Öffnungen in den Spannköpfen geführt ist. Dadurch können relativ hohe Spannkräfte eingebracht werden.

Die Erfindung wird im Folgenden anhand bevorzugter Ausführungsbeispiele in Verbindung mit den Zeichnungen näher beschrieben. Hierin zeigen:
- Fig. 1: eine Profilschelle in ungespanntem Zustand,
- Fig. 2: die Profilschelle in gespanntem Zustand,
- Fig. 3: die Profilschelle im Querschnitt,
- Fig. 4: eine Schnittansicht einer gesetzten Profilschelle,
- Fig. 5: ein Dichtelement einer ersten Ausführungsform,
- Fig. 6: einen Querschnitt des Dichtelements nach Fig. 5 und
- Fig. 7: einen Querschnitt eines Dichtelements einer zweiten Ausführungsform.

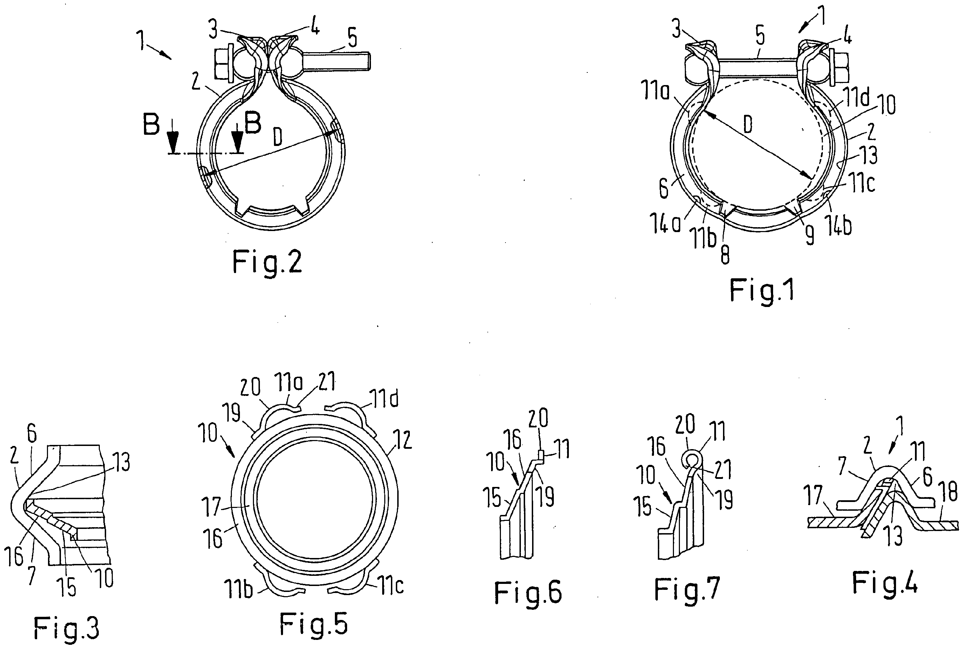

In Fig. 1 ist eine Profilschelle 1 in ungespanntem Zustand dargestellt. Die Profilschelle 1 weist ein Profilband 2 auf, das an seinen sich gegenüberliegenden Enden jeweils einen Spannkopf 3, 4 aufweist. Die Spannköpfe 3, 4 sind über ein Spannelement 5 miteinander verbunden, das als Spannschraube ausgebildet ist. Durch Einschrauben der Spannschraube 5 wird ein Durchmesser der Profilschelle 1 verringert und damit eine Spannkraft erzeugt.

Das Profilband 2 weist einen im Wesentlichen V-förmigen Querschnitt mit zwei Profilwänden 6, 7 auf. In den Profilwänden 6, 7 sind jeweils sich gegenüberliegende Unterbrechungen 8, 9 ausgebildet. Durch diese Unterbrechungen 8, 9 werden im Profilband 2 stoffschlüssige Gelenke gebildet, die ein einfaches Aufweiten bzw. Spannen der Profilschelle 1 ermöglichen.

Radial innerhalb der Profilschelle 1 ist ein gestrichelt dargestelltes Dichtelement 10 angeordnet, das ringförmig ausgebildet ist. Das Dichtelement 10 weist verformbare Abstandshalter 11a, 11b, 11c, 11d auf, die an einer radialen Außenseite 12 des Dichtelements angeordnet sind. Dabei liegen die Abstandshalter 11a bis 11d unter einer Vorspannung kraftschlüssig an einer radialen Innenseite 13 des Profilbandes 2 an.

An der radialen Innenseite 13 des Profilbands 2 sind radial nach innen ragende Vorsprünge 14a, 14b in Form von Sicken ausgebildet. Die Abstandshalter 11b, 11c liegen in Umfangsrichtung an den Vorsprüngen 14a, 14b an, wodurch eine Vorpositionierung in Umfangsrichtung erfolgt.

In Fig. 2 ist die Profilschelle 1 in gespanntem Zustand dargestellt. Die Spannschraube 5 ist vollständig eingeschraubt worden, so dass die Spannköpfe 3, 4 aneinander anliegen. Ein freier Innendurchmesser D des Dichtelements ist nun innerhalb des Profilbandes 2 aufgenommen worden. Dabei haben sich die Abstandshalter 11a bis 11d entsprechend verformt.

In Fig. 3 ist nun ein Querschnitt der Profilschelle 1 nach Fig. 2 gezeigt. Das Dichtelement 10 ist zwischen den Profilwänden 6, 7 des Profilbandes 2 angeordnet und liegt mit seiner radialen Außenseite 12 an der Innenseite 13 des Profilbandes an. Die Abstandshalter 11a, 11b sind dabei derartig verformt, dass sie glatt an der radialen Außenseite 12 und an der Innenseite 13 anliegen. In gespanntem Zustand der Profilschelle 1 beanspruchen die Abstandshalter 11a bis 11d also nur einen Platz entsprechend ihrer Materialstärke. Dieser zusätzliche Bauraumbedarf ist aber unerheblich.

Das Dichtelement 10 weist mehrere Stufen 15, 16 auf. Durch diese Stufen wird beim Verbinden der Profilschelle 1 mit Rohrenden 17, 18 (Fig. 4) eine Spannung eingebracht, die die Dichtigkeit erhöht.

Dabei erfolgt beim Montieren der Profilschelle 1 auf den Rohrenden 17, 18 nicht nur eine elastische Verformung der Abstandshalter 11a bis 11d, sondern auch des Dichtelements 10. Durch die Profilschelle 1 wird aufgrund der Gestaltung des Profilbandes 2 dann eine axiale und radiale Haltekraft auf die Rohrenden 17, 18 ausgeübt.

In Fig. 5 ist das Dichtelement 10 in einer ersten Ausführungsform dargestellt. Das Dichtelement 10 ist mit insgesamt vier verformbaren Abstandshaltern 11a bis 11d versehen, die an der Außenseite 12 des Dichtelements angeordnet sind. Die Abstandshalter 11a bis 11d können dabei einstückig mit dem Dichtelement 10 ausgebildet sein, aber beispielsweise auch aufgelötet oder angeschweißt sein. Die Abstandshalter 11a bis 11d weisen jeweils ein festgelegtes Ende 19, einen Kontaktbereich 20 und ein freies Ende 21 auf. Dabei erstrecken sich die Abstandshalter 11a bis 11d parallel zum Umfang des Dichtelements 10. Das festgelegte Ende 19 und das freie Ende 21 können sich also auf gleicher axialer Höhe befinden. Die axiale Erstreckung des Dichtelements 10 wird durch die Abstandshalter 11a bis 11d also nicht unbedingt vergrößert. Dennoch können die Abstandshalter 11a bis 11d mit einer relativ großen Längserstreckung ausgebildet sein, wodurch eine hohe Elastizität erhalten wird. Da das freie Ende 21 zunächst von der Außenseite 12 beabstandet ist, erfolgt eine erste Verformung des Abstandshalters 11a bis 11d mit relativ geringen Kräften, bis das freie Ende 21 an der Außenseite 12 des Dichtelements anliegt. Bei einer weiteren Verformung der Abstandshalter 11a bis 11d, wie sie beim Spannen der Profilschelle 1 erfolgt, sind etwas höhere Kräfte erforderlich, da das freie Ende 21 dann auf der Außenseite 12 gleitet und der Abstandshalter 11a bis 11d beidseitig des Kontaktbereichs 20 verformt werden muss. Die erforderlichen Verformungskräfte nehmen also zu. Dadurch ist es möglich, das Dichtelement 10 mit relativ geringem Krafteinsatz in die Profilschelle 1 einzusetzen und dennoch einen sicheren Halt des Dichtelements in der Profilschelle 1 zu erreichen.

In Fig. 6 ist ein Querschnitt des Dichtelements 10 nach Fig. 5 dargestellt.

Fig. 7 zeigt eine weitere Ausbildung des Dichtelements 10, bei dem der Abstandshalter 11 nicht in Umfangsrichtung gerichtet ist, sondern ein eingerolltes freies Ende 21 aufweist. Auch bei einer derartigen Ausgestaltung wird ein Abstandshalter 11 mit einer ausreichenden Elastizität erreicht, durch den gleichzeitig ausreichende Vorspannkräfte eingebracht werden können, so dass das Dichtelement 10 kraftschlüssig in der Profilschelle 1 bzw. dem Profilband 2 gehalten werden kann.

Die Profilschelle bzw. das Profilband ist in der Regel aus einem metallischen Werkstoff hergestellt. Das Dichtelement kann ebenfalls ein Metall aufweisen. Durch die kraftschlüssige Halterung des Dichtelements 10 in dem Profilband 2 mit Hilfe der elastisch verformbaren Abstandshalter 11, die von einer radialen Außenseite 12 des Dichtelements 10 ausgehen und an einer radialen Innenseite 13 des Profilbandes 2 anliegen, wird ein sicherer Halt des Dichtelements 10 auch in ungespanntem Zustand der Profilschelle 1 erreicht, ohne dass eine formschlüssige Verbindung erforderlich ist. Diese Verbindung ist daher sehr einfach herstellbar und verwendbar. Durch die Vorspannung der Abstandshalter und die optionalen radialen Vorsprünge an der Innenseite des Profilbandes ist ein Verdrehen des Dichtelements vor der Endmontage ausgeschlossen. Erst beim abschließenden Montieren der Profilschelle mit dem Dichtelement an Rohrenden bzw. entsprechenden Flanschen wird das Moment zwischen der Profilschelle und dem Dichtelement so groß, dass eine leichte Verdrehung zwischen Dichtelement und Profilband auftreten kann. Dadurch ist ein perfektes Ausrichten und Setzen von Dichtelement und Profilschelle zueinander gesichert. Gleichzeitig werden optimale Dichteigenschaften erreicht. Dabei kann das Dichtelement ohne Spezialwerkzeuge mit der Profilschelle verbunden werden.

## Patentansprüche

1. Profilschelle mit einem Spannelement und einem Profilband, an dem ein Dichtelement verliersicher gehalten ist, wobei das Dichtelement an seiner radialen Außenseite (12) mindestens zwei elastisch verformbare, in Umfangsrichtung zueinander beabstandete Abstandshalter (11a - 11d) aufweist, die kraftschlüssig an einer Innenseite (13) des Profilbands (2) anliegen, und die das Dichtelement dadurch auch im ungespannten Zustand der Schelle verliersicher halten, **dadurch gekennzeichnet, dass** die Abstandshalter (11a - 11d) ein festgelegtes Ende (19), mit dem sie mit dem Dichtelement (10) verbunden sind, einen Kontaktbereich (20), mit dem sie an der Innenseite (13) des Profilbands (2) anliegen, und ein freies Ende (21) aufweisen, wobei der Kontaktbereich radial am weitesten außen angeordnet ist und das freie Ende nach innen gebogen ist.

2. Profilschelle nach Anspruch 1, **dadurch gekennzeichnet, dass** das Dichtelement (10) als Metalldichtung ausgebildet ist.

3. Profilschelle nach einem der Ansprüche 1 bis 2, **dadurch gekennzeichnet, dass** die Abstandshalter (11a - 11d) einstückig mit dem Dichtelement (10) ausgebildet sind.

4. Profilschelle nach einem der Ansprüche 1 bis 3, **dadurch gekennzeichnet, dass** sich die Abstandshalter (11a - 11d) parallel zur Umfangsrichtung erstrecken.

5. Profilschelle nach einem der Ansprüche 1 bis 4, **dadurch gekennzeichnet, dass** das freie Ende (21) eingerollt ist, wobei eine Biegeachse parallel zur Umfangsrichtung ist.

6. Profilschelle nach einem der Ansprüche 1 bis 5, **dadurch gekennzeichnet, dass** an der Innenseite (13) des Profilbands (2) radiale Vorsprünge (14a, 14b) ausgebildet sind.

7. Profilschelle nach einem der Ansprüche 1 bis 6, **dadurch gekennzeichnet, dass** das Profilband (2) zwei Spannköpfe (3, 4) aufweist, mit denen das Spannelement (5) zusammenwirkt.

## Claims

1. Profile clamp comprising a tensioning element and a profile strip on which a seal element is held in a loss-secure manner, wherein the seal element, on the radial outer side (12) thereof, comprises at least two resiliently deformable spacers (11a-11d) spaced apart from one another in the circumferential direction, which abut in a force-fit manner on an inner side (13) of the profile strip (2) and, in this way, hold the seal element in a loss-secure manner also in the untensioned state of the clamp, **characterised in that**
the spacers (11a-11d) comprise a fixed end (19) connecting same to the seal element (10), a contact region (20) with which the spacers abut on the inner side (13) of the profile strip (2), and a free end (21), wherein the contact region is arranged at the outermost point and the free end is bent inwards.

2. Profile clamp according to claim 1, **characterised in that** the seal element (10) is formed as a metal seal.

3. Profile clamp according to one of claims 1 to 2, **characterised in that** the separators (11a-11d) are formed as a single piece with the seal element (10).

4. Profile clamp according to one of claims 1 to 3, **characterised in that** the separators (11a-11d) extend parallel to the circumferential direction.

5. Profile clamp according to one of claims 1 to 4, **characterised in that** the free end (21) is curled, wherein a bending axis is parallel to the circumferential direction.

6. Profile clamp according to one of claims 1 to 5, **characterised in that** radial protrusions (14a, 14b) are formed on the inner side (13) of the profile strip (2).

7. Profile clamp according to one of claims 1 to 6, **characterised in that** the profile strip (2) comprises two tensioning heads (3, 4), with which the tensioning element engages (5).

## Revendications

1. Bride de fixation profilée avec un élément de serrage et une bande profilée sur laquelle un élément d'étanchéité est maintenu sans risque de perte, l'élément d'étanchéité comportant sur son côté extérieur radial (12) au moins deux écarteurs (11a à 11d) qui sont élastiquement déformables et distants les uns des autres dans la direction circonférentielle, qui s'appuient par adhérence contre un côté intérieur (13) de la bande profilée (2) et qui maintiennent ainsi l'élément d'étanchéité sans risque de perte même lorsque la bride de fixation n'est pas serrée, **caractérisée en ce que** les écarteurs (11a à 11d) comportent une extrémité fixe (19), avec laquelle ils sont assemblés à l'élément d'étanchéité (10), une zone de contact (20), avec laquelle ils s'appuient contre le côté intérieur (13) de la bande profilée (2), et une extrémité libre (21), la zone de contact étant agencée radialement le plus à l'extérieur possible et l'extrémité libre étant repliée vers l'intérieur.

2. Bride de fixation profilée selon la revendication 1, **caractérisée en ce que** l'élément d'étanchéité (10) est conçu comme un joint d'étanchéité métallique.

3. Bride de fixation profilée selon l'une des revendications 1 à 2, **caractérisée en ce que** les écarteurs (11a à 11d) sont conçus d'une seule pièce avec l'élément d'étanchéité (10).

4. Bride de fixation profilée selon l'une des revendications 1 à 3, **caractérisée en ce que** les écarteurs (11a à 11d) s'étendent parallèlement à la direction circonférentielle.

5. Bride de fixation profilée selon l'une des revendications 1 à 4, **caractérisée en ce que** l'extrémité libre (21) est enroulée, un axe de flexion étant parallèle à la direction circonférentielle.

6. Bride de fixation profilée selon l'une des revendications 1 à 5, **caractérisée en ce que** des parties en saillie (14a, 14b) radiales sont conçues sur le côté intérieur (13) de la bande profilée (2).

7. Bride de fixation profilée selon l'une des revendications 1 à 6, **caractérisée en ce que** la bande profilée (2) comporte deux têtes de serrage (3, 4) avec lesquelles l'élément de serrage (5) coopère.
